# EUROPEAN PATENT APPLICATION

(11) **EP 4 838 391 A1**
(43) Date of publication of application: **11.11.2026**
(21) Application number: 25174847.1
(22) Date of filing: 07.05.2025
(51) Int. Cl.: G06F 21/46, G06N 20/00

(54) **METHOD FOR INCREASING PASSWORD SECURITY OF A SYSTEM PROTECTED WITH A SYSTEM PASSWORD**

(71) Applicant: Siemens Aktiengesellschaft, 80333 München (DE)
(72) Inventor: Zwanzger, Johannes, 85579 Neubiberg (DE)
(74) Representative: Siemens Patent Attorneys

(57) **Abstract**

The method for increasing password security of a system protected with a system password, particularly an industrial device uses at least one candidate plurality of password candidates. For each password candidate of the candidate plurality, a measure of probability that the password candidate is actually used as a password is determined using a machine learning tool. Depending on the measure, a strictly smaller subset of password candidates from the candidate plurality is selected. The password candidates of the subset are used to check whether the system is protected with the password candidates. The machine learning tool may be previously trained with additional candidate pluralities. If the system is protected with a password identical to one in the subset, that password or associated access may be blocked or restricted.

## Description

The invention relates to a method for increasing password security of a system protected with a system password.

Password security is a critical concern in modern computing systems, particularly for industrial devices and control systems. Many systems rely on password protection to prevent unauthorized access and maintain the integrity of sensitive operations. However, as computing power increases and more sophisticated password cracking techniques emerge, the effectiveness of simple password protection schemes has diminished.

Traditional approaches to password security often involve enforcing minimum length and complexity requirements. Users may be required to include a mix of uppercase and lowercase letters, numbers, and special characters in their passwords. While these measures can improve security to some degree, they do not address the fundamental issue that many users still choose predictable or easily guessable passwords.

Password cracking tools have become increasingly powerful, able to test millions of password combinations per second. These tools often utilize large dictionaries of common passwords and variations, as well as sophisticated algorithms to generate likely password candidates. As a result, even seemingly complex passwords may be vulnerable to brute force attacks or dictionary-based cracking attempts.

For industrial systems and devices, the consequences of a password breach can be severe. Unauthorized access could lead to disruption of critical processes, theft of proprietary information, or even physical damage to equipment. Therefore, there is an ongoing need for more robust password security measures that can effectively protect against modern cracking techniques.

One challenge in improving password security is balancing increased protection with usability. Overly complex password requirements can lead to user frustration and may actually decrease security if users resort to writing down passwords or reusing them across multiple systems. Finding ways to enhance security without placing an undue burden on users remains an area of active research and development.

It is therefore the object of the present invention to provide a method for increasing password security of a system protected with a system password that overcomes one or more of these problems.

This object of the present invention is solved with a method for increasing password security of a system protected with a system password with the features contained in claim 1.

Advantageous aspects of the invention are contained in the subsequent dependent claims, the following description and the drawing.

The method according to the invention is a method for increasing password security of a system protected with a system password, particularly an industrial device. The method according to the invention includes using at least one candidate plurality of password candidates. Furthermore, the method according to the invention includes the step of determining, for each password candidate of the candidate plurality, a measure of probability that the password candidate of the at least one candidate plurality is actually used as a password using a machine learning tool. Depending on the measure, the method according to the invention includes selecting a strictly smaller subset of password candidates from the at least one candidate plurality and using the password candidates of the subset to check whether the system is protected with one or at least one of the password candidates. This method provides an efficient way to filter large lists of password candidates to identify those password candidates, that are most likely actual passwords, thereby improving the effectiveness of password security checks while reducing computational resources required. As an advantage, the method also allows to reduce the time necessary to check the most promising password candidates, since applying the machine learning tool for each and every password could cause significant delays. The method according to the invention advantageously allows to filter the password candidates to a strictly smaller subset first, so that checking the password candidates of the strictly smaller subset would not result in additional delays. Furthermore, advantageously, a list of password candidates may be reduced once to a strictly smaller subset for checking password candidates for a plurality of devices. In this case, a drastic reduction of the number of password candidates pays of multiple times on each device. The computational overhead only occurs one time, whereas further handling only the strictly smaller subset on each and every device reduces the computational costs for checking password candidates on each device.

In another advantageous aspect of the method according to the invention, the machine learning tool is previously trained with one or more additional candidate pluralities. Pre-training the machine learning tool with additional candidate pluralities enhances its ability to accurately assess the likelihood of a password candidate being an actual password, leading to more precise filtering of password candidates. Such candidate pluralities are often made public and can easily be retrieved online, particularly from reliable institutions and organizations.

In another advantageous aspect of the method according to the invention, if it is determined that the system is protected with a system password identical to one of the password candidates of the subset, this system password is blocked or restricted or an access associated with this system password is blocked or restricted or a user using this system password is blocked. This aspect provides an immediate response to identified security vulnerabilities, preventing unauthorized access and enhancing overall system security.

In another advantageous aspect of the method according to the invention, the machine learning tool comprises a neural network. Utilizing a neural network as the machine learning tool allows for complex pattern recognition in password structures, improving the accuracy of probability assessments for password candidates.

In another advantageous aspect of the method according to the invention, the neural network is a recurrent neural network. A recurrent neural network is particularly well-suited for analyzing sequential data such as password strings, enabling more sophisticated evaluation of password candidates. In particular, recurrent neural networks do not rely on use cases of password candidates of fixed length but can be given password candidates with arbitrary numbers of characters as inputs. Alternatively or in addition, the neural network in an advantageous aspect of the invention is or comprises a convolutional neural network and/or a transformer and/or an n-Grammen-based neural network.

In another advantageous aspect of the method according to the invention, the measure of probability is linearin relation with the probability.

In another advantageous aspect of the method according to the invention, the measure of probability is non-linear Preferably, the measure of the probability is monotonic, in particular strictly monotonic in its dependence on the probability. Optionally and advantageously, the measure of the probability is strictly increasing with increasing probability.

In other advantageous aspects of the invention, the measure of probability may mean a measure that correlates with the probability. It is understood that the measure of probability is not necessarily an evidence-based measure, but an assumed measure.

In another advantageous aspect of the method according to the invention, those password candidates that reach at least a threshold value for the measure of probability form the subset of password candidates. Using a threshold value ensures that only password candidates with a sufficiently high probability of being actual passwords are included in the subset, focusing security checks on the most likely candidates.

In another advantageous aspect of the method according to the invention, those password candidates that, measured by the measure of probability, have the highest probability of actually being used as a password form the subset of password candidates. This approach ensures that the subset contains the most probable password candidates, maximizing the efficiency of subsequent security checks.

In another advantageous aspect of the method according to the invention, the number and/or memory space of the subset of password candidates is and/or will be predetermined. Predetermining the size or memory space of the subset allows for better resource management and optimization of the security checking process. Preferably, this predetermined number or memory space of password candidates with the highest probability is chosen as the subset.

In another advantageous aspect of the method according to the invention, the method is computer-implemented.

In another advantageous aspect of the method according to the invention, the industrial device is a manufacturing device and/or a control device and/or an IoT device.

In a second aspect, a computer program product containing instructions which, when executed on a computer, perform the method according to the invention is provided.

In a third aspect, an industrial device, configured to carry out the method according to the invention and/or with a computer program product according to the invention is provided.

Embodiments of the invention will be described, by way of example, with reference to the following drawings, in which:

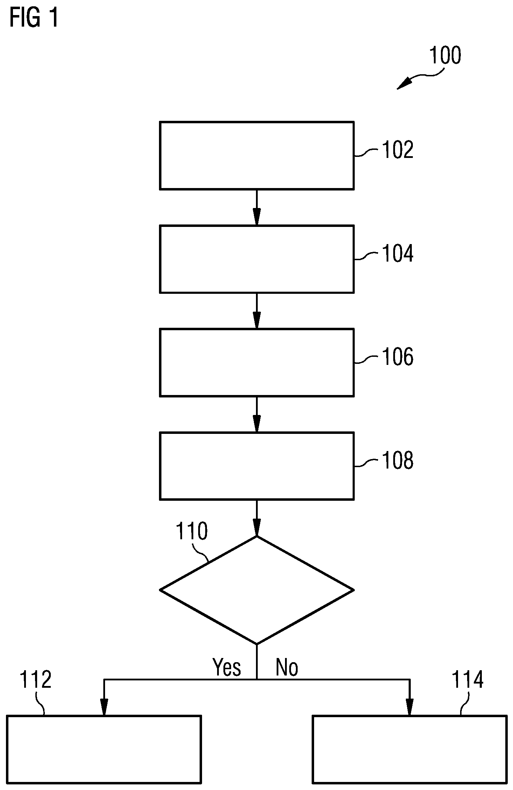

FIG. 1 illustrates a schematic flowchart for an embodiment of the method of increasing password security for an industrial system.

Common reference numerals are used throughout the figures to indicate similar features.

FIG. 1 illustrates a flowchart for a method 100 of increasing password security for a system protected with a system password. The method 100 may be implemented on systems like an industrial device, such as a manufacturing device, a control device, or an Internet of Things (IoT) device.

The method 100 begins with step 102, where at least one candidate plurality of password candidates is used. This candidate plurality may be generated using various tools, such as commercially available tools, particularly known as John the Ripper, Hashcat.

In step 104, the method 100 determines a measure of probability for each password candidate in the candidate plurality using a machine learning tool. This machine learning tool may be a neural network that has been previously trained with one or more additional candidate pluralities. The neural network is optimized for fast evaluation to handle potentially billions of strings efficiently.

The neural network is applied to determine a value for each string in the candidate plurality. This value represents the measure of probability that the corresponding password candidate is actually used as a password.

Based on the measures of probability, step 106 involves selecting a strictly smaller subset of password candidates from the original candidate plurality. The selection of this subset may be based on either a fixed number or percentage of candidates, or a minimum threshold value for the measure of probability.

In step 108, the password candidates from the selected subset are used to check whether the system is protected with these candidates. This involves attempting to access the system using the password candidates from the subset. In alternative embodiments, the password candidates may be checked against stored data in the respective system, that are used to check any input password. Such data may be constituted by derived data of the system password, such as a hash of the system password.

Step 110 represents a decision point where it is determined if the system password matches any of the candidates in the subset. If there is a match, the method 100 proceeds to step 112, where the identified password or associated access is blocked or restricted. If there is no match, the method 100 moves to step 114 to end the process. In an alternative embodiment, the identified password or associated access is not blocked or restricted, but a notification is given to the user, optionally with the request to change the password.

The method 100 is computer-implemented and may be embodied as a computer program product containing instructions which, when executed on a computer, perform the described steps.

An industrial device, such as a manufacturing device, a control device, or an IoT device, may be configured to carry out the method 100 of increasing password security. Such an industrial device may include a computer program product containing instructions to perform the method 100.

In another embodiment, the machine learning tool comprises a neural network. The neural network is trained on distinguishing between password strings and general strings. This training process utilizes existing password lists from the internet as a source of known password strings.

In a further embodiment, the neural network is specifically a recurrent neural network. This type of neural network is particularly well-suited for processing sequential data such as strings of characters.

The measure of probability determined by the machine learning tool may be linear in one embodiment. In an alternative embodiment, the measure of probability is non-linear, allowing for more complex relationships between input features and the likelihood of a string being a password.

The method of selecting the subset of password candidates from the candidate plurality can vary. In one embodiment, password candidates that reach at least a threshold value for the measure of probability form the subset. This approach ensures that only candidates with a minimum likelihood of being passwords are included.

In another embodiment, the password candidates with the highest probability of being used as a password form the subset. This approach focuses on the most likely candidates, regardless of their absolute probability values.

The size of the subset may be controlled in different ways. In one embodiment, the number of password candidates in the subset is predetermined. Alternatively, the memory space allocated for the subset of password candidates is predetermined. These approaches allow for control over computational resources used in subsequent password checking steps.

## Claims

1. Method for increasing password security of a system protected with a system password, particularly an industrial device, wherein at least one candidate plurality of password candidates is used (102) and for each password candidate of the candidate plurality, a measure of probability that the password candidate of the at least one candidate plurality is actually used as a password is determined using a machine learning tool (104), and depending on the measure, a strictly smaller subset of password candidates from the at least one candidate plurality is selected (106) and the password candidates of the subset are used to check whether the system is protected with the password candidates (108).

2. Method according to the preceding claim, wherein the machine learning tool is previously trained with one or more additional candidate pluralities.

3. Method according to any of the preceding claims, wherein if it is determined that the system is protected with a system password identical to one of the password candidates of the subset (110), this system password is blocked or restricted or an access associated with this system password is blocked or restricted or a user using this system password is blocked (112) and/or a notification about the system password and/or a request to change the system password is submitted to the system and/or a user of the system.

4. Method according to any of the preceding claims, wherein the machine learning tool comprises a neural network.

5. Method according to any of the preceding claims, wherein the neural network is or comprises a recurrent neural network and/or a convolutional neural network and/or a transformer and/or an n-Grammen-based neural network.

6. Method according to any of the preceding claims, wherein the measure of probability is linear.

7. Method according to any of the preceding claims, wherein the measure of probability is non-linear and/or monotonic, in particular strictly monotonic, preferably strictly increasing, with increasing probability.

8. Method according to any of the preceding claims, wherein the measure of probability is a measure, particularly an assumed measure, that correlates with the probability.

9. Method according to any of the preceding claims, wherein those password candidates that reach at least a threshold value for the measure of probability form the subset of password candidates.

10. Method according to any of the preceding claims, wherein those password candidates that, measured by the measure of probability, have the highest probability of actually being used as a password form the subset of password candidates.

11. Method according to any of the preceding claims, wherein the number and/or memory space of the subset of password candidates is and/or will be predetermined.

12. Method according to any of the preceding claims, which is computer-implemented.

13. Method according to any of the preceding claims, wherein the industrial device is a manufacturing device and/or a control device and/or an IoT device.

14. Computer program product containing instructions which, when executed on a computer, perform a method (100) according to any of the preceding claims.

15. Industrial device, configured to carry out a method (100) according to any of claims 1 to 13 and/or with a computer program product according to claim 14.
